# EUROPÄISCHE PATENTSCHRIFT

(11) **EP 1 624 216 B1**
(45) Veröffentlichungstag und Bekanntmachung des Hinweises auf die Patenterteilung: **25.07.2007**
(21) Anmeldenummer: 05012830.5
(22) Anmeldetag: 15.06.2005
(51) Int. Cl.: F16D 65/12

(54) **Scheibenbremse**
Disk brake
Frein à disque

(30) Priorität: 07.08.2004 DE 102004038484
(43) Veröffentlichungstag der Anmeldung: 08.02.2006
(73) Patentinhaber: AUDI AG, 85045 Ingolstadt (DE)
(72) Erfinder: Pabst, Hans-Georg, 85080 Gaimersheim (DE)
(74) Vertreter: Asch, Konrad

(56) Entgegenhaltungen:
- EP-A- 1 026 419
- DE-A1- 3 432 501
- FR-A- 2 762 653

## Beschreibung

Die Erfindung betrifft eine Scheibenbremse für Kraftfahrzeuge mit mindestens einer mit der Radnabe des zu bremsenden Rades verbundenen Bremsscheibe, auf die in einem Bremssattel beidseitig der Bremsscheibe angeordnete Bremsbelege einwirken können.

Solche mit Bremsscheiben aus Grauguss ausgestattete mit auf der Scheibeninnenseite nur einen hydraulischen Bremszylinder aufweisende Scheibenbremsen sind allgemein bekannt, wobei zur Abführung der beim Bremsen entstehenden Wärme besondere Vorkehrungen, insbesondere in Form von Belüftungsturbinen notwendig sind. Dies ist aufwendig und benötigt Bauraum. Darüber hinaus entfällt die dadurch erzielte Belüftung mit Ende des Bremsvorganges.

Es ist daher bereits vorgeschlagen worden, die Bremsscheibe solcher Scheibenbremsen aus Keramik herzustellen in der Weise, dass auf einen Träger aus Stahl eine integrale keramische Bremsscheibe formschlüssig aufgeklebt wird.

Bekanntlich sind mit Keramikmaterialien wesentlich höhere Temperaturen zu beherrschen als mit Grauguss, die dann mehr als 1000°C betragen können. Die Wärmeabfuhr über Strahlung steigt nämlich in der vierten Potenz zur Temperatur, sodass auf diese Weise die komplette Bremsleistung über Wärmestrahlung abgeführt werden kann.

Eine Bremsscheibe mit einem aus einem metallischen Werkstoff bestehenden radial inneren Bereich und einem aus Keramik ausgebildeten radial äußeren Bereich ist in der FR-A-2 762 653 offenbart. Die Anwendung von Keramikbremsen bereitet jedoch Probleme, insbesondere aufgrund der Sprödigkeit von Keramik sowie der unterschiedlichen Ausdehnungskoeffizienten von Stahl und Keramik.

Eine gattungsgemäße, sämtliche Merkmale des Oberbegriffs des Anspruches 1 aufweisende Bremsscheibe für eine Scheibenbremse ist aus der DE-A-34 32 501 bekannt. Die insbesondere für Schienenfahrzeuge ausgebildete Bremsscheibe weist einen durch axiale Schrauben mit einem Nabenkörper zu verbindenden Ringkörper auf. Der Ringkörper ist in einen radial inneren Tragringabschnitt und einen die Reibringflächen tragenden Reibabschnitt gegliedert. Der Tragringabschnitt ist von sich radial erstreckenden Schlitzen durchsetzt, welche sich bis in den Tragringabschnitt und damit in die Reibringflächen erstrecken. Die radialäußeren Enden der Schlitze sind gerundet. Zwischen dem Nebenkörper und dem Tragringabschnitt sind radiale Ringschultern vorgesehen, welche sich im kalten Zustand der Bremsscheibe mit einem Radialabstand gegenüberstehen, welcher beim Aufheizen der Bremsscheibe durch deren Wärmedehnung aufzehrbar ist. Am Übergang vom Tragringabschnitt zum Reibabschnitt findet sich eine axiale Stufe, deren Höhe dem halben bis dem ganzen Verschleißgrenzmaß der Bremsscheibe entsprechen kann. Als nachteilig erweist sich hierbei der Umstand, dass die Bremsscheibe aufgrund des Radialabstands zwischen Nabenkörper und Ringschultern beim Bremsvorgang zu unerwünschten Schwingungen neigt, was zu einer vorzeitigen Zerstörung der Bremsscheibe führen kann.

Der Erfindung liegt daher die Aufgabe zugrunde, eine Scheibenbremse für ein Kraftfahrzeug gemäß der im Oberbegriff des Anspruches 1 angegebenen Art unter Vermeidung der genannten Nachteile derart weiterzubilden, dass eine ausreichende Wärmeabfuhr mit gleichzeitig verbesserten Betriebseigenschaften sichergestellt ist.

Diese Aufgabe ist gemäß der Erfindung durch die kennzeichnenden Merkmale des Patentanspruches 1 gelöst.

Weitere Merkmale der Erfindung ergeben sich aus den Unteransprüchen.

Durch die erfindungsgemäße Ausbildung der Scheibenbremse in Form von kreisringförmigen Bremsscheibensegmenten aus Keramik, deren Fußbereiche über Schwalbenschwanz- oder Tannenbaum-Lageflächen in den Umfangsbereich der Radnabe eingreifen und in dieser Lage über den anschraubbaren Lagerring auf der Radnabe unverrückbar festgehalten sind entsteht eine form- und kraftschlüssige Verbindung der zu einer Kreisringscheibe zusammengefüten Keramiksegmente mit der Radnabe, die allen üblichen Belastungen einer solchen Scheibenbremse bei einem Bremsvorgang stand hält. Durch den schrägen Anlauf der Bremsbeläge wird ein ruckfreies Bremsen erreicht und die Lebensdauer der kreisringförmigen Bremsscheibensegmente erhöht. Da Bauteile für die Belüftung der Scheibenbremse entfallen. Weist die erfindungsgemäße Scheibenbremse wesentlich geringere ungefederte Massen als bisher auf und bietet daher einen höheren Federungskomfort, woraus eine bessere Radhaftung des damit ausgestatteten Fahrzeuges erzielt wird. Auch wird Bauraum gespart.

Aus Ringsegmenten zusammengesetzte Bremsscheiben sind an sich bekannt, wie die DE 195 27 173 C2 zeigt. Die Art und Wahl der Stoßfugen der Ringsegmente und der radial inneren und/oder äußeren Befestigungsmittel zeigen aber zweifelsfrei, dass die dort beschriebene Bremsscheibenanordnung Bremsscheibensegmente aus Stahl und nicht aus Keramik betrifft.

Die Erfindung ist nachfolgend anhand eines in der Zeichnung mehr oder minder schematisch dargestellten Ausführungsbeispiels beschrieben. Es zeigen:
- Fig. 1: einen Schnitt durch eine nur teilweise dargestellte Scheibenbremse gemäß der Erfindung und
- Fig. 2: ein in Bezug auf Figur 1 im verkleinerten Maßstab dargestellter Schnitt gemäß der Linie II in Figur 1 der Scheibenbremse gemäß der Erfindung mit weiteren nur teilweisen dargestellten Bauelementen.

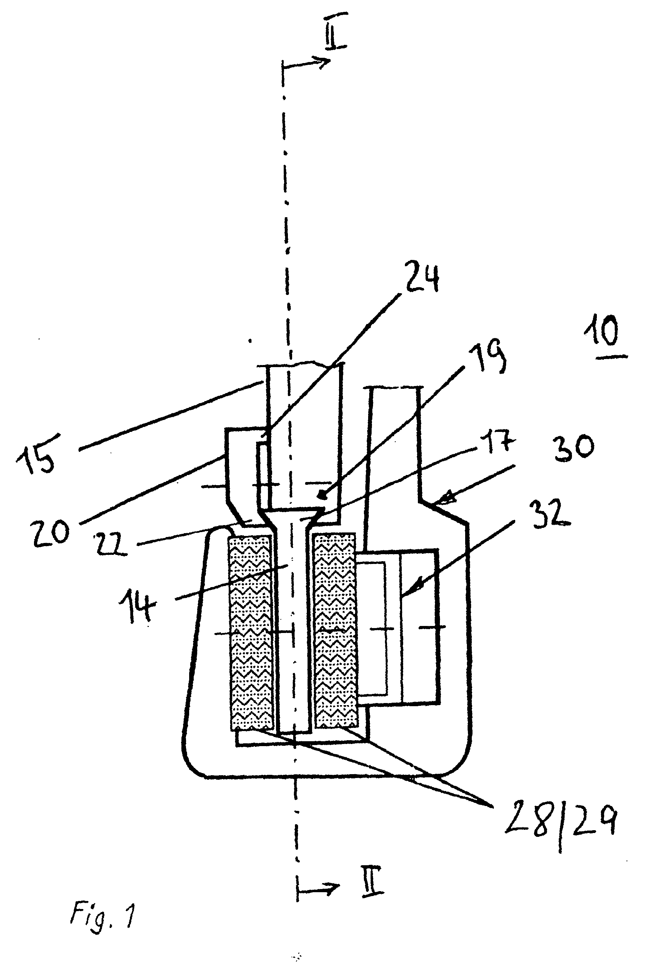

Eine insgesamt mit der Bezugsziffer 10 bezeichnete Scheibenbremse für Kraftfahrzeuge weist eine kreisringförmige aus einzelnen von Trennlinien 11 begrenzte Ringsegmenten 12 zusammengefügte Bremsscheibe 14 auf, die mit einer hier nur teilweise dargestellten Radnabe 15 form- und kraftschlüssig verbunden ist; vgl. Figur 1. Die Trennlinien 11 schneiden die Drehachse der Radnabe 15.

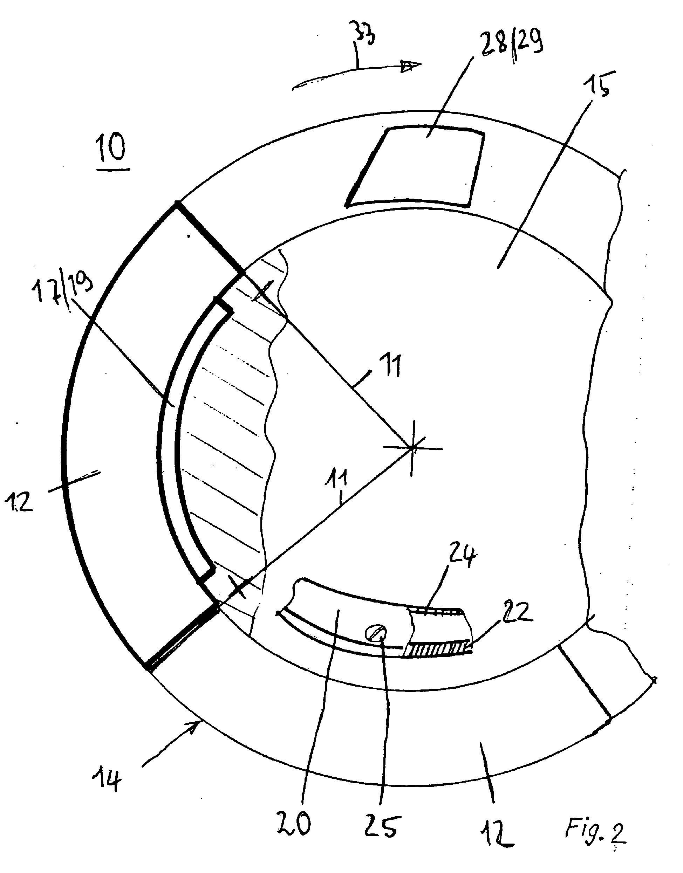

Die einzeln aus Fig. 2 ersichtlichen Ringsegmente 12 bestehen aus Keramik und weisen an ihren der Radnabe 15 zugewandten Endbereichen je einen schwalbenschwanz- oder tannenbaumförmigen Fußbereich 17 auf, die in komplementär geformte einseitig zur nicht dargestellten Radfelge zu offene Ausnehmungen 19 an der radialen Außenmantelfläche die Radnabe 15 formschlüssig eingreifen.

Ein ebenfalls kreisringförmiger im Querschnitt etwa U-förmiger Lagerring 20 untergreift mit seinem einen komplementär zur schwalbenschwanz- oder tannenbaumförmigen Ausbildung der Fußbereiche der Ringsegmente 12 ausgebildeten, einen Vorsprung darstellenden Schenkel 22 den freien Fußbereich der Ringsegmente und stützt sich mit seinem anderen Schenkel 24 an der zugewandten ebenflächigen Seite der Radnabe 15 ebenflächig ab; vgl. Figur 1. In dieser alle Ringsegmente übergreifenden Montagelage ist der Lagerring 20 mit der Radnabe 15 mittels einer Schraubverbindung 25 fest aber lösbar verbunden. Damit werden alle die kreisringförmige Bremsscheibe 14 bildenden Ringsegmente 12 unverrückbar in ihrer dargestellten Gebrauchslage gehalten; vgl. Figur 2.

Beidseitig der Bremsscheibe 14 - vgl. Figur 1 - sind einen schrägen Anlauf 27 - vgl. Figur 2 - aufweisende Bremsbeläge 28, 29 angeordnet, die in einem Bremssattel 30 gelagert und über einen hydraulischen Kolben 32 in an sich bekannter Weise in die Bremslage überführbar sind. Die Drehrichtung der Bremsscheibe ist mit dem Pfeil 33 angedeutet.

Als Keramikmaterial ist vorzugsweise Siliziumcarbid mit Carbonfaserverstärkung zu verwenden, auch sind weiter Additive zur Erhöhung des Reibwertes, der Geräuschdämpfung und der Minderung des Verschleißes hilfreich.

Durch die erfindungsgemäße Anwendung von keramischen Ringsegmenten als Bremsscheibenmaterial ist die vorstehend beschriebene Scheibenbremse wesentlich leichter als die bisher bekannten Scheibenbremsen mit Bremsscheiben aus Grauguss oder Stahl, da alle zusätzlichen Bauteile für die Belüftung der Scheibenbremse wie Luft und/oder Turbinenräder für die Abführung der Bremswärme sowie der für deren Montage benötigte Aufwand entfallen. Es ergeben sich daher bei geringerem Raumbedarf als bisher kleinere ungefederte Massen mit besserer Radhaftung und daraus resultierend einen höheren Fahrkomfort mit großer Lebensdauer der beschriebenen Scheibenbremse.

### BEZUGSZEICHENLISTE

- 10: Scheibenbremse
- 11: Trennlinien
- 12: Ringsegmente
- 14: Bremsscheibe
- 15: Radnabe
- 17: Fußbereich
- 19: Ausnehmung
- 20: Lagerring
- 22: Schenkel des Lagerrings
- 24: Schenkel des Lagerrings
- 25: Schraubverbindung
- 27: Schräger Anlauf der Bremsbeläge
- 28: Bremsbelag
- 29: Bremsbelag
- 30: Bremssattel
- 32: Kolben
- 33: Drehrichtung

## Patentansprüche

1. Scheibenbremse für Kraftfahrzeuge mit mindestens einer mit der Radnabe (15) des zu bremsenden Rades verbundenen Bremsscheibe (14), auf die in einem Bremssattel (30) beidseitig der Bremsscheibe angeordnete Bremsbeläge (28, 29) einwirken können, wobei die Bremsscheibe (14) mit ihrem der Radnabe (15) zugewandten Endbereich (17) formschlüssig und mittels eines Lagerringes (20) kraftschlüssig mit der Radnabe (15) verbunden ist, **dadurch gekennzeichnet, dass** die Bremsscheibe (14) aus einzelnen kreisförmigen, von radialen, das Zentrum der Radnabe (15) schneidenden Trennlinien begrenzten Kreissegmenten (12) aus Keramikmaterial besteht, wobei die formschlüssige Verbindung zwischen der die Bremsscheibe (14) bildenden Kreisringsegmente (12) und der Radnabe (15) als Schwalbenschwanz- und/oder Tannenbaum-Verbindung ausgebildet ist, und wobei die kraftschlüssige Verbindung zwischen den Kreisringsegmenten (12) und der Radnabe (15) durch einen im Querschnitt etwa U-förmigen, an der Radnabe (15) anschraubbaren (Schraubverbindung 25) Lagerring (20) gebildet ist, dessen der Schwalbenschwanz- und/oder Tannenbaum-Verbindung zugewandte vorsprungförmige Schenkel (22) die Endbereiche (17) der Kreisringsegmente (12) die Schwalbenschwanz- und/oder Tannenbaum-Verbindung vervollständigend formschlüssig untergreift und dessen abgewandter ebenfalls vorsprungförmiger Schenkel (24) an der zugewandten Seitenfläche der Radnabe (15) ebenflächig anliegt.

2. Scheibenbremse nach Anspruch 1, **dadurch gekennzeichnet, dass** die auf die Bremsscheibe (14) einwirkenden Bremsbeläge (28, 29) ebenfalls aus Keramik bestehen.

3. Scheibenbremse nach den Ansprüchen 1 und 2, **dadurch gekennzeichnet, dass** die aus Keramik bestehenden Bremsbeläge (28, 29) in Bezug auf die Drehrichtung (33) der Bremsscheibe (14) einen schrägen Anlauf (27) aufweisen.

## Claims

1. Disk brake for motor vehicles comprising at least one brake disk (14) connected to the wheel hub (15) of the wheel to be braked, disk brake linings (28, 29) arranged on either side of the brake disk in a brake caliper (30) being able to act on said brake disk, wherein the brake disk (14) is connected to the wheel hub (15) positively with its end region (17) which faces towards the wheel hub (15) and non-positively by means of a bearing ring (20), **characterised in that** the brake disk (14) comprises individual circularshaped ring segments (12) of ceramic material, said segments being bordered by radial separating lines intersecting the centre of the wheel hub (15), wherein the positive connection between the ring segments (12) forming the brake disk (14) and the wheel hub (15) is configured as a dovetail and/or herringbone connection, and wherein the non-positive connection between the ring segments (12) and the wheel hub (15) is formed by a bearing ring (20) which is approximately U-shaped in cross-section and can be screwed (screw connection 25) onto the wheel hub (15), the projection-shaped limb (22) of said bearing ring facing towards the dovetail and/or herringbone connection engaging in positive manner behind the end regions (17) of the ring segments (12), complementing the dovetail and/or herringbone connection, and the also projection-shaped limb (24) of said bearing ring which faces away therefrom lying flat against the side face of the wheel hub (15) which faces towards it.

2. Disk brake according to claim 1, **characterised in that** the brake linings (28, 29) acting on the brake disk (14) are also made of ceramic material.

3. Disk brake according to claims 1 and 2, **characterised in that** the brake linings (28, 29) made of ceramic material have an ramp (27) which is inclined relative to the rotation direction (33) of the brake disk (14).

## Revendications

1. Frein à disque pour des véhicules automobiles avec au moins un disque de frein (14) raccordé au moyeu de roue (15) de la roue devant être freinée, sur lequel disque des garnitures de frein (28, 29) disposées dans un étrier de frein (30) des deux côtés du disque de frein peuvent agir, le disque de frein (14) étant relié par engagement positif à sa zone finale (17) tournée vers le moyeu de roue (15) et relié à force au moyen d'une bague de roulement (20) au moyeu de roue (15), **caractérisé en ce que** le disque de frein (14) est composé de segments individuels en forme de cercle (12) dans un matériau céramique et délimités par des lignes de séparation radiales coupant le centre du moyeu de roue (15), le raccord par engagement positif entre les segments annulaire (12) formant le disque de frein (14) et le moyeu de roue (15) étant développé sous la forme d'un raccord en forme de queue d'aronde et / ou de sapin et, le raccord à force entre les segments annulaires (12) et le moyeu de roue (15) étant formé par une bague de roulement (20) pouvant être vissée (assemblage par vis 25) sur le moyeu de roue (15) et à peu près en forme de U en coupe transversale, bague dont la branche en forme d'épaulement (22) tournée vers le raccord en forme de queue d'aronde et / ou de sapin vient en prise par engagement positif en dessous des zones finales (17) des segments annulaires (12) complétant le raccord en queue d'aronde et / ou de sapin et dont la branche opposée également en forme d'épaulement (24) se situe également sur la surface latérale proche du moyeu de roue (15).

2. Frein à disque selon la revendication 1, **caractérisé en ce que** les garnitures de frein (28, 29) agissant sur le disque de frein (14) sont également en céramique.

3. Frein à disque selon les revendications 1 et 2, **caractérisé en ce que** les garnitures de frein (28, 29) en céramique présentent un avancement incliné (27) par rapport au sens de rotation (33) du disque de frein (14).
